(19) Europäisches Patentamt
European Patent Office
Office européen des brevets

(11) Veröffentlichungsnummer: **0 036 545**
**B1**

(12) # EUROPÄISCHE PATENTSCHRIFT

(45) Veröffentlichungstag der Patentschrift: **25.04.84**

(51) Int. Cl.³: **C 09 B 29/095** // D06P3/34

(21) Anmeldenummer: **81101701.1**

(22) Anmeldetag: **09.03.81**

(54) **Wasserunlösliche Monoazofarbstoffe, ihre Herstellung und ihre Verwendung.**

(30) Priorität: **22.03.80 DE 3011178**

(43) Veröffentlichungstag der Anmeldung: **30.09.81 Patentblatt 81/39**

(45) Bekanntmachung des Hinweises auf die Patenterteilung: **25.04.84 Patentblatt 84/17**

(84) Benannte Vertragsstaaten: **BE CH DE FR GB IT LI**

(56) Entgegenhaltungen:
**CH - A - 589 695**
**FR - A - 785 958**
**JP - A - 72 035 353**
**US - A - 2 151 857**
**US - A - 2 323 314**
**US - A - 2 373 700**

**Die Akte enthält technische Angaben, die nach dem Eingang der Anmeldung eingereicht wurden und die nicht in dieser Patentschrift enthalten sind.**

(73) Patentinhaber: **CASSELLA Aktiengesellschaft, Hanauer Landstrasse 526, D-6000 Frankfurt am Main 61 (DE)**

(72) Erfinder: **Bühler, Ulrich, Dr., Nidderaustrasse 13, D-6369 Schöneck 1 (DE)**
Erfinder: **Löwenfeld, Rudolf, Dr., Quellenweg 2, D-6072 Dreieich (DE)**
Erfinder: **Kosubek, Uwe, Am Vogelanger 28, D-6087 Büttelborn 2 (DE)**
Erfinder: **Kallay, Maria, Kastanienweg 7d, D-6240 Königstein (DE)**

(74) Vertreter: **Urbach, Hans-Georg, Dr. et al, Hanauer Landstrasse 526, D-6000 Frankfurt am Main 61 (DE)**

EP 0 036 545 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Wasserunlösliche Monoazofarbstoffe, ihre Herstellung und ihre Verwendung

Die vorliegende Erfindung betrifft wertvolle Monoazofarbstoffe der allgemeinen Formel I

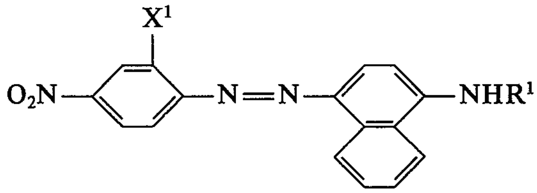

(I)

worin

$X^1$ Nitro, Cyan, Methylsulfonyl,
$R^1$ einen Rest der Formel Ia oder Ib

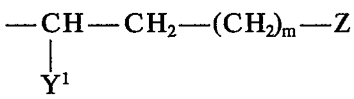

(Ia)

oder

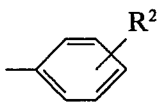

(Ib)

bedeuten, wobei

$Y^1$ Wasserstoff, Methyl oder Ethyl
Z Cyan, Phenyl, Phenoxy, gegebenenfalls substituiert durch Alkyl mit 1 bis 4 C-Atomen, Alkoxy mit 1 bis 4 C-Atomen oder Halogen; Alkoxy mit 1 bis 4 C-Atomen gegebenenfalls substituiert durch Alkoxy mit 1 bis 4 C-Atomen, Cyan oder Phenyl;
m eine Zahl von 0 bis 2 und
$R^2$ Wasserstoff, Alkyl mit 1 bis 4 C-Atomen oder Alkoxy mit 1 bis 4 C-Atomen bedeuten,

ihre Mischungen mit Monoazofarbstoffen der allgemeinen Formel II

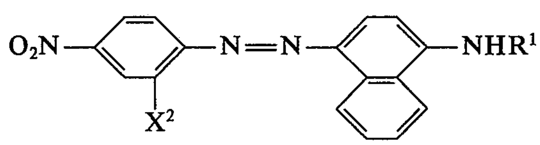

(II)

worin $X^2$ Chlor oder Brom bedeutet und $X^1$ und $R^1$ die vorstehend angegebenen Bedeutungen haben, ihre Herstellung durch Diazotierung von Aminen der Formel III

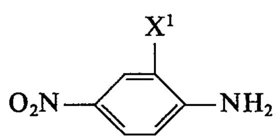

(III)

gegebenenfalls in Mischung mit Aminen der Formel V

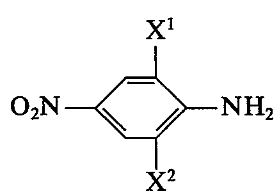

(V)

und Kupplung auf α-Naphthylaminderivate der Formel IV

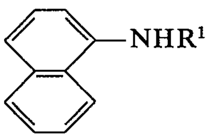

(IV)

sowie ihre Verwendung zum Colorieren von synthetischen, hydrophoben Fasern.

Farbstoffe mit α-Naphthylamin-Kupplungskomponenten sind bereits in zahlreichen Veröffentlichungen beschrieben worden. Auch Farbstoffe, bei denen auf α-Naphthylamin-Kupplungskomponenten diazotiertes 2,4-Dinitro-, 2-Cyan-4-nitro- und 2-Methylsulfonyl-anilin gekuppelt wurde, sind beispielsweise aus GB-PS 1 428 129, DOS 2 054 685, DOS 2 709 774, JA-PS 7 235 353, US-PS 2 266 142 und US-PS 2 045 324 bekannt.

Diese bekannten Farbstoffe lassen jedoch noch zahlreiche Wünsche der Praxis offen, insbesondere im Hinblick auf die Applikation, wo sich beispielsweise Mängel im Aufbauvermögen in der Temperaturstabilität, in der pH-Beständigkeit und in der Reduktionsempfindlichkeit, bzw. daraus resultierender Egalitätsmängel, aber auch im Hinblick auf die Echtheiten der Färbungen und nicht zuletzt auf die Kosten der Färbung unter Berücksichtigung der Farbstärke zeigen. Die Farbstoffe der vorliegenden Erfindung tragen überraschenderweise den Bedürfnissen der Praxis in weit höherem Maße Rechnung als die bisher bekannten.

Phenoxygruppen, die für Z stehen, können im Phenylkern noch einen der oben angegebenen Substituenten tragen. Dieser Substituent, wie auch der Substituent $R^2$ des für $R^1$ stehenden Restes

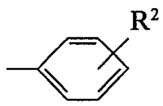

können sowohl in 2-, 3- oder 4-Stellung, bezogen auf die Bindungsstelle des Phenylkerns an das O-, N- bzw. C-Atom stehen.

Phenylgruppen, die als Substituenten in für Z stehendem Alkoxy vorkommen, können ihrerseits in 2-, 3- oder 4-Stellung einen der Substituenten Methyl, Methoxy oder Chlor tragen.

Gegebenenfalls substituierte Phenoxy-Reste, die für Z stehen können, sind beispielsweise 2-Methylphenoxy, 3-Methylphenoxy, 4-Methyl-phenoxy, 4-Methoxyphenoxy, 2-Chlorphenoxy, 3-Chlorphenoxy, 4-Chlorphenoxy.

Gegebenenfalls substituierte Alkoxygruppen mit 1 bis 4 C-Atomen, für die Z stehen kann, sind beispielsweise Methoxy, Ethoxy, Propoxy, i-Propoxy, Butoxy, i-Butoxy, tert.Butoxy, 2-Hydroxy-ethoxy, 2-Methoxyethoxy, 2-Ethoxyethoxy, 2-Propoxyethoxy, 2-Butoxy-ethoxy, 3-Hydroxypropoxy, 3-Methoxypropoxy, 3-Ethoxypropoxy, 3-Methoxybutoxy, 3-Ethoxybutoxy, 4-Hydroxybutoxy, 4-Methoxybutoxy, 2-Acetoxyethoxy, 2-Propanoyloxyethoxy, 2-Butyryloxyethoxy.

Bevorzugt sind solche Farbstoffe der Formel I, worin $R^1$ ein Rest der Formel Ib ist, insbesondere diejenigen, in denen $R^2$ Wasserstoff, Methyl, Ethyl, i-Propyl, Methoxy, Ethoxy, Propoxy, i-Propoxy, Butoxy, i-Butoxy ist.

In der Gruppe der erfindungsgemäßen Farbstoffe der Formel I, in denen $R^1$ ein Rest der Formel Ia ist, kommt man zu den besonders vorteilhaften Individuen, wenn man die folgenden Gesichtspunkte berücksichtigt.

Bevorzugte für Z stehende Alkoxygruppen sind die unsubstituierten mit 1 bis 4 C-Atomen oder die durch Alkoxy mit 1 oder 2 C-Atomen substituierten Alkoxygruppen mit 2 bis 4 C-Atomen.

Aus der Gruppe von erfindungsgemäßen Farbstoffen, in denen $R^1$ ein Rest der Formel Ia ist, sind auch diejenigen sehr vorteilhaft, in denen $Y^1$ Wasserstoff und Z gegebenenfalls wie oben angegeben substituiertes Alkoxy mit 1 bis 4 C-Atomen, gegebenenfalls wie oben angegeben substituiertes Phenoxy bedeuten.

Die Zahl m, die zwischen 0 und 2 liegen kann, ist vorteilhafterweise 0, wenn $Y^1$ Wasserstoff oder Methyl und Z Cyan bedeuten, sie ist vorteilhafterweise 1, wenn $Y^1$ Wasserstoff, Z gegebenenfalls wie oben angegeben substituiertes Alkoxy mit 1 bis 4 C-Atomen oder gegebenenfalls wie oben angegeben substituiertes Phenoxy bedeuten.

Besonders vorteilhaft sind auch diejenigen erfindungsgemäßen Farbstoffe, in denen $R^1$ ein Rest der Formel Ia ist, wenn $Y^1$ Wasserstoff, m Null und Z Cyan ist.

Besonders bevorzugt sind solche erfindungsgemäßen Farbstoffe der Formel I, die mehrere vorteilhafte oder bevorzugte Merkmale aufweisen.

Technisch besonders vorteilhaft in Bezug auf Farbstoffausbeute, Ziehvermögen und Echtheit der Färbungen bzw. Drucke sind Mischungen von erfindungsgemäßen Monoazofarbstoffen der allgem. Formel I mit Monoazofarbstoffen der allgem. Formel II

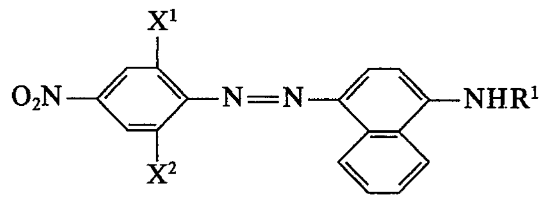

(II)

worin $X^2$ Chlor oder Brom bedeutet und $X^1$ und $R^1$ die in Anspruch 1 angegebenen Bedeutungen haben.

Derartige erfindungsgemäße Farbstoffmischungen haben einen Gehalt von 10 bis 90, vorzugsweise 30 bis 70 Gew.-%an Farbstoffen der Formel I und 90 bis 10, vorzugsweise 70 bis 30 Gew.-%an Farbstoffen der Formel II.

Die Farbstoffe der Formel II und ihre Herstellung sind bekannt. (Vergl. GB 985 254, DE-AS 2 510 112, DE-OS 2 319 709, DE-OS 2 116 315, FR 792 450, DE-OS 1 963 590, JA 7 235 353 und DE-OS 1 544 396).

Die Herstellung der erfindungsgemäßen Farbstoffe der Formel I erfolgt, indem man ein Amin der allgemeinen Formel III

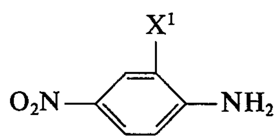

(III)

worin $X^1$ die oben genannten Bedeutungen hat, diazotiert und auf eine Kupplungskomponente der allgemeinen Formel IV

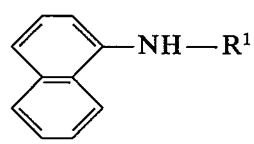

(IV)

worin $R^1$ die oben genannten Bedeutungen hat, kuppelt.

Die Diazotierung des Amins der Formel III geschieht in an sich bekannter Weise durch Einwirkung von salpetriger Säure oder salpetrige Säure abspaltende Verbindungen. Beispielsweise können die Amine in Schwefelsäure, Salzsäure oder in niederen aliphatischen Carbonsäuren, wie z. B. Essigsäure oder Propionsäure, gelöst werden und bei 0 bis 60°C durch Zusatz von Nitrosylschwefelsäure bzw. Natriumnitrit diazotiert werden. Die Kupplung wird im sauren wäßrigen Medium, in einer niederen aliphatischen Carbonsäure, wie z. B. Essigsäure, die zweckmäßigerweise mit Wasser verdünnt ist bzw. in einer Mischung aus Wasser und einem in Wasser wenig löslichen Alkohol, wie n- oder i-Butanol, bei Temperaturen von 0 bis 30°C ausgeführt. Bevorzugt wird hierbei der Temperaturbereich von 0 bis 15°C. Zur Vervollständigung der Kupplungsreaktion kann es zweckmäßig sein, den pH-Wert des Kupplungsansatzes gegen Ende der Reaktion durch Zusatz von Alkalien, wie z. B. von Natriumacetat auf einen Wert von 3 bis 6 zu puffern. Es kann im Hinblick auf die Formierung der Dispersionsfarbstoffe oder hinsichtlich ihrer Farbausbeute von Vorteil sein, ein Gemisch von diazotierten Aminen der Formel III mit einer Kupplungskomponente der Formel IV oder ein diazotiertes Amin der Formel III mit einem Gemisch von Kupplungskomponenten der allgem. Formel IV zu kuppeln oder zwei oder mehrere auf getrenntem Wege dargestellte Einzelfarbstoffe zu mischen.

Will man Mischungen von erfindungsgemäßen Farbstoffen der Formel I mit Farbstoffen der Formel II herstellen so ist es zweckmäßig, Mischungen von Aminen der allgemeinen Formeln III und V

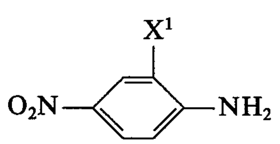

(III)

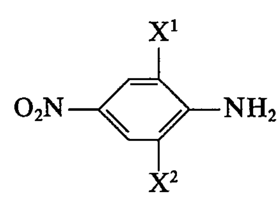

(V)

worin $X^1$ und $X^2$ die oben genannten Bedeutungen haben, zu diazotieren und auf eine Kupplungskomponente der Formel IV

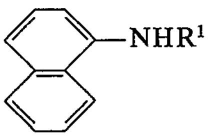

(IV)

worin $R^1$ die oben genannte Bedeutung hat, zu kuppeln.

Die erfindungsgemäßen Farbstoffe eignen sich insbesondere zum Färben und Bedrucken von hydrophoben Fasermaterialien, wie beispielsweise Polyamid, Cellulose-2 1/2 acetat, Cellulosetriacetat und insbesondere Polyestermaterialien, z.B. Polyethylenglykolterephthalat. Sie liefern hierauf nach üblichen Färbe- und Druckverfahren farbstarke, rotviolette bis schwarze Färbungen und Drucke mit sehr guten Echtheitseigenschaften, insbesondere sehr guter Licht-, Trockenhitzeplissier- und Trockenhitzefixierechtheit und einem sehr guten Verhalten bei der Kunstharzausrüstung bei sehr gutem Thermomigrationsverhalten.

Das Färben der genannten Fasern, die einzeln oder im Gemisch mit anderen Faserarten wie z.B. Baumwolle, regenerierter Zellulosefasern oder Wolle vorliegen können, mit den erfindungsgemäßen Farbstoffen erfolgt zweckmäßig aus wäßriger Suspension in Gegenwart von Carriern zwischen etwa 80—110°C in Abwesenheit von Carriern zwischen etwa 110—140°C, sowie nach dem sogenannten Thermofixierverfahren bei etwa 180—230°C. Das Bedrucken der genannten Materialien kann so durchgeführt werden, daß die mit den neuen Farbstoffen bedruckte Ware in Gegenwart eines Carriers bei Temperaturen zwischen etwa 80—110°C oder auch in Abwesenheit eines Carriers bei etwa 110—140°C gedämpft oder auch nach dem sogenannten Thermofixierverfahren bei etwa 180—230°C behandelt wird.

Die erfindungsgemäßen Farbstoffe eignen sich auch zum Färben der vorstehend aufgeführten hydrophoben Materialien aus organischen Lösungsmitteln und zum Färben in der Masse.

Die erfindungsgemäßen Farbstoffe der Formel I sowie insbesondere ihre Mischungen untereinander und mit Farbstoffen der Formel II sind bei der Applikation nach einem der oben angegebenen Verfahren den bisher bekannten vergleichbaren Farbstoffen überraschenderweise in Bezug auf Farbstärke, Lichtechtheit, Sublimerechtheit, pH-Beständigkeit, Alkalibeständigkeit, Reduktionsbeständigkeit, Temperaturbeständigkeit und im Aufbau- und Ausziehvermögen erheblich überlegen.

Gegenüber den ähnlichen Farbstoffen nach der schweizerischen Patentschrift Nr. 589 695 liefern die erfindungsgemäßen Farbstoffe Nuancen, die klarer und farbreiner sind. Auch sind die erfindungsgemäßen Farbstoffe unempfindlich gegenüber Schwankungen des pH-Wertes.

Die folgenden Ausführungsbeispiele veranschaulichen die Herstellung der erfindungsgemäßen Farbstoffe und Farbstoffmischungen und eine Möglichkeit zu ihrer Anwendung.

## Beispiel 1

18,3 g 2,4-Dinitranilin werden bei 15°C in Eisessig durch Zugabe von 34,2 g Nitrosylschwefelsäure diazotiert und bei 0—5°C auf eine Suspension von 23,0 g N-Phenyl-$\alpha$-naphthylamin in 200 ml n-Butanol und 400 ml Wasser gekuppelt. Nach 3 Stunden wird der entstandene Farbstoff abgesaugt, mit n-Butanol und Wasser gewaschen und unter vermindertem Druck getrocknet.

Man erhält auf diese Weise 35,3 g des Farbstoffs der Formel

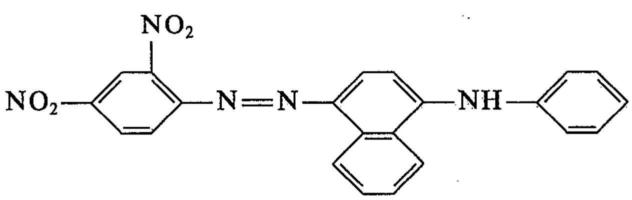

der bei 215—20°C schmilzt und Polyester in schwarzbraunen Nuancen mit sehr guten coloristischen Echtheiten färbt.

## Beispiel 2

Werden analog Beispiel 1 18,3 g 2,4-Dinitranilin und 21,8 g 2,4-Dinitro-6-chloranilin durch Zusatz von 68,4 g Nitrosylschwefelsäure diazotiert, auf 46,0 g N-Phenyl-$\alpha$-naphthylamin gekuppelt und der entstandene Farbstoff isoliert, so erhält man 34,6 g einer Mischung die zu 50% den Farbstoff vom Beispiel 1 und zu 50% den Farbstoff der Formel

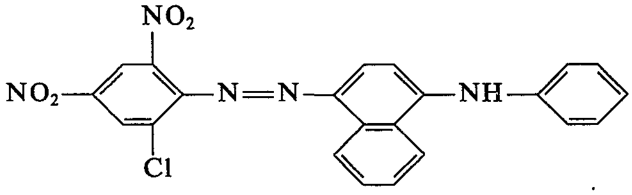

enthält und Polyester in schwarzen Nuancen von sehr guten coloristischen Echtheiten färbt.

Beispiel 3

Ein Gewebe aus Polyethylenglykolterephthalat wird auf dem Foulard bei 30°C mit einer Flotte geklotzt, die 30,0 g des in feine Verteilung gebrachten Farbstoffs des Beispiels 2, 1,0 g Polyacrylamid von K-Wert 120 und 0,5 g eines Polyglykolethers des Oleylalkohols und 968,5 g Wasser enthält. Nach dem Trocknen wird 60 Sekunden bei 210°C im Thermofixierrahmen fixiert. Nach anschließendem Spülen, reduktiver Nachbehandlung mit einer 0,2%igen alkalischen Natriumdithionitlösung während 15 Minuten bei 70 bis 80°C, Spülen und Trocknen, erhält man eine schwarze Färbung mit sehr guten coloristischen Eigenschaften, insbesondere einer sehr guten Licht- und Thermofixierechtheit.

Analog den Beispielen 1 und 2 lassen sich die erfindungsgemäßen Farbstoffe und Farbstoffmischungen der folgenden Tabellen herstellen. Sie färben hydrophobe Fasern ebenfalls in vollen braunen bis schwarzen Nuancen von ausgezeichneter Echtheit.

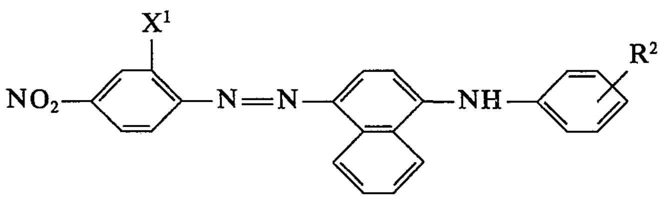

| Nr. | $X^1$ | $R^2$ | Nuance auf PES |
|---|---|---|---|
| 3 | CN | H | blauviolett |
| 4 | $SO_2CH_3$ | H | blauviolett |
| 5 | $NO_2$ | 4-$CH_3$ | schwarzbraun |
| 6 | CN | 4-$CH_3$ | blauviolett |
| 7 | $NO_2$ | 4-$C_2H_5$ | schwarzbraun |
| 8 | $SO_2CH_3$ | 4-$C_2H_5$ | blauviolett |
| 9 | $NO_2$ | 4-$CH(CH_3)_2$ | schwarzbraun |
| 10 | CN | 4-$CH(CH_3)_2$ | schwarzbraun |
| 11 | CN | 4-$OCH_3$ | rotstichig blau |
| 12 | CN | 4-$OC_4H_9$ | rotstichig blau |
| 13 | $NO_2$ | 4-$OC_2H_5$ | schwarzbraun |

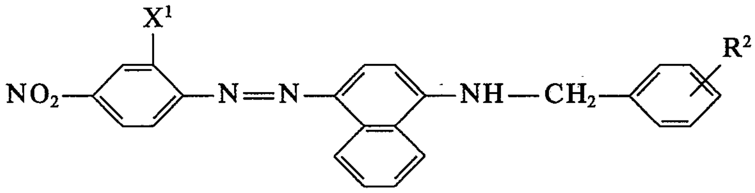

| Nr. | $X^1$ | $R^2$ | Nuance auf PES |
|---|---|---|---|
| 14 | CN | H | blauviolett |
| 15 | $NO_2$ | H | blauviolett |
| 16 | $SO_2CH_3$ | H | blauviolett |
| 17 | $NO_2$ | 3-$CH_3$ | blauviolett |
| 18 | CN | 4-$CH_3$ | blau |

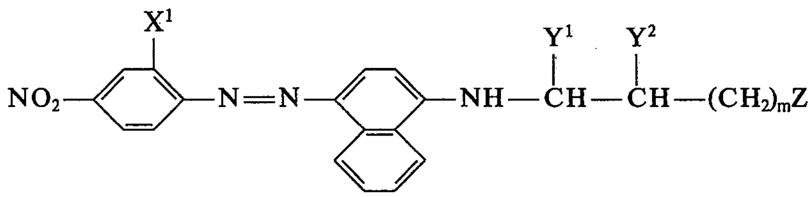

| Nr. | $X^1$ | $Y^1$ | $Y^2$ | m | Z | Nuance auf PES |
|---|---|---|---|---|---|---|
| 19 | $NO_2$ | H | OH | 1 | OH | rotstichig marine |
| 20 | $NO_2$ | H | OH | 1 | $OC_2H_5$ | rotstichig marine |
| 21 | $NO_2$ | H | OH | 1 | O—i-$C_3H_7$ | rotstichig marine |
| 22 | CN | H | OH | 1 | O—n-$C_4H_9$ | rotstichig marine |
| 23 | $SO_2CH_3$ | H | OH | 1 | $O(CH_2)_2OH$ | rotstichig marine |
| 24 | $SO_2CH_3$ | H | OH | 1 | $O(CH_2)_2OCH_3$ | rotstichig marine |
| 25 | $SO_2CH_3$ | H | OH | 1 | $O(CH_2)_2OC_3H_7$ | rotstichig marine |
| 26 | $NO_2$ | H | OH | 1 | $O(CH_2)_4OH$ | rotstichig marine |
| 27 | $NO_2$ | H | OH | 1 | $O(CH_2)_2OC_2H_5$ | rotstichig marine |
| 28 | $NO_2$ | H | OH | 1 | $OC_6H_5$ | blauviolett |
| 29 | $NO_2$ | H | OH | 1 | $OC_6H_4$—4-$CH(CH_3)_2$ | blauviolett |
| 30 | CN | H | OH | 1 | $OC_6H_4$—4-$OCH_3$ | blauviolett |
| 31 | CN | H | OH | 1 | $OC_6H_4$—3-Cl | blauviolett |
| 32 | CN | H | $OCOCH_3$ | 1 | $OCOCH_3$ | violett |
| 33 | CN | H | $OCOC_3H_7$ | 1 | $OCOC_3H_7$ | violett |
| 34 | $NO_2$ | H | $OCOCH_2OCH_3$ | 1 | $OCOCH_2OCH_3$ | violett |

Fortsetzung

| Nr. | $X^1$ | $Y^1$ | $Y^2$ | m | Z | Nuance auf PES |
|---|---|---|---|---|---|---|
| 35 | $NO_2$ | H | $OCOC_2H_5$ | 1 | $O(CH_2)_2OCOC_2H_5$ | violett |
| 36 | $NO_2$ | H | $OCOCH_3$ | 1 | $O(CH_2)_3OCOCH_3$ | violett |
| 37 | $SO_2CH_3$ | H | $OCOi\text{-}C_3H_7$ | 1 | $O(CH_2)_4OCO-i\text{-}C_3H_7$ | violett |
| 38 | $NO_2$ | H | $OCOOC_2H_5$ | 1 | $OCOOC_2H_5$ | rotstichig marine |
| 39 | $NO_2$ | H | $OCOOC_4H_9$ | 1 | $OCOOC_4H_9$ | rotstichig marine |
| 40 | $NO_2$ | H | $OCOO(CH_2)_2OCH_3$ | 1 | $OCOO(CH_2)_2OCH_2$ | rotstichig marine |
| 41 | $NO_2$ | H | $OCOOC_6H_5$ | 1 | $OCOOC_6H_5$ | rotstichig marine |
| 42 | CN | H | $OCOOCH_3$ | 1 | $O(CH_2)_2OCOOCH_3$ | rotstichig marine |
| 43 | CN | H | $OCOOC_6H_5$ | 1 | $O(CH_2)_2OCOOC_6H_5$ | rotstichig marine |
| 44 | $SO_2CH_3$ | H | $OCOOC_3H_7$ | 1 | $O(CH_2)_4OCOOC_3H_7$ | rotstichig marine |
| 45 | $NO_2$ | H | H | 0 | OH | rotstichig marine |
| 46 | $NO_2$ | H | H | 0 | $OCH_3$ | rotstichig marine |
| 47 | CN | H | H | 0 | $O-n\text{-}C_3H_7$ | rotstichig marine |
| 48 | $NO_2$ | H | H | 0 | $O-i\text{-}C_4H_9$ | rotstichig marine |
| 49 | $NO_2$ | H | H | 0 | $O(CH_2)_2OH$ | rotstichig marine |
| 50 | $NO_2$ | H | H | 0 | $O(CH_2)_2OC_2H_5$ | rotstichig marine |
| 51 | $NO_2$ | H | H | 0 | $O(CH_2)_3O-t\text{-}C_4H_9$ | rotstichig marine |
| 52 | $NO_2$ | H | H | 0 | $O(CH_2)_4OCH_3$ | rotstichig marine |
| 53 | CN | H | H | 0 | $OC_6H_5$ | rotstichig marine |
| 54 | CN | H | H | 0 | $OC_6H_4-3\text{-}CH_3$ | rotstichig marine |
| 55 | CN | H | H | 0 | $O(CH_2)_2OC_6H_5$ | rotstichig marine |
| 56 | $SO_2CH_3$ | H | H | 0 | $O(CH_2)_4OC_6H_5$ | rotstichig marine |
| 57 | $SO_2CH_3$ | H | H | 1 | $OC_4H_9$ | rotstichig marine |
| 58 | $SO_2CH_3$ | H | H | 1 | $OC_6H_5$ | rotstichig marine |
| 59 | $SO_2CH_3$ | H | H | 2 | $OC_2H_5$ | rotstichig marine |
| 60 | $SO_2CH_3$ | H | H | 2 | $O(CH_2)_2OCH_3$ | rotstichig marine |
| 61 | $SO_2CH_3$ | H | H | 2 | $OC_6H_4-4\text{-}C_2H_5$ | rotstichig marine |
| 62 | $NO_2$ | H | H | 0 | $OCOCH_3$ | blauviolett |
| 63 | $NO_2$ | H | H | 0 | $OCOC_2H_5$ | blauviolett |
| 64 | CN | H | H | 0 | $OCO-i\text{-}C_3H_7$ | blauviolett |

Fortsetzung

| Nr. | $X^1$ | $Y^1$ | $Y^2$ | m | Z | Nuance auf PES |
|---|---|---|---|---|---|---|
| 65 | CN | H | H | 0 | $OCOCH_2OC_2H_5$ | blauviolett |
| 66 | CN | H | H | 0 | $OCOCH_2O-i-C_4H_9$ | blauviolett |
| 67 | CN | H | H | 0 | $OCOCH(OCH_3)CH_3$ | blauviolett |
| 68 | CN | H | H | 0 | $OCOCH(OC_4H_9)CH_3$ | blauviolett |
| 69 | $NO_2$ | H | H | 0 | $OCOCH(OC_2H_5)C_2H_5$ | blauviolett |
| 70 | $NO_2$ | H | H | 0 | $OCOC(C_3H_7)(CH_3)_2$ | blauviolett |
| 71 | $NO_2$ | H | H | 0 | $OCOCH_2OC_6H_5$ | blauviolett |
| 72 | $NO_2$ | H | H | 0 | $OCOCH_2(OC_6H_4-2-CH_3)CH_3$ | blauviolett |
| 73 | $SO_2CH_3$ | H | H | 0 | $OCO(CH_2)_2OCH_3$ | blauviolett |
| 74 | $SO_2CH_3$ | H | H | 0 | $OCO(CH_2)_2O-i-C_4H_9$ | blauviolett |
| 75 | $SO_2CH_3$ | H | H | 0 | $OCO(CH_2)_2OC_6H_5$ | blauviolett |
| 76 | $NO_2$ | H | H | 1 | $OCOCH_3$ | rotstichig marine |
| 77 | $NO_2$ | H | H | 1 | $OCOCH_2OC_2H_5$ | rotstichig marine |
| 78 | $NO_2$ | H | H | 2 | $OCOC_2H_5$ | rotstichig marine |
| 79 | $NO_2$ | H | H | 2 | $OCO-i-C_3H_7$ | rotstichig marine |
| 80 | $NO_2$ | H | H | 2 | $OCOCH_2OC_6H_5$ | rotstichig marine |
| 81 | $SO_2CH_3$ | H | H | 2 | $OCO(CH_2)_2OCH_3$ | rotstichig marine |
| 82 | $SO_2CH_3$ | H | H | 0 | $OCOOC_2H_5$ | rotstichig marine |
| 83 | CN | H | H | 0 | $OCOO-i-C_5H_7$ | rotstichig marine |
| 84 | CN | H | H | 0 | $OCOO(CH_2)_2OC_2H_5$ | rotstichig marine |
| 85 | CN | H | H | 0 | $OCOOC_6H_5$ | rotstichig marine |
| 86 | $NO_2$ | H | H | 1 | $OCOOCH_3$ | rotstichig marine |
| 87 | $NO_2$ | H | H | 2 | $OCOO(CH)_2OCH_3$ | rotstichig marine |
| 88 | $NO_2$ | H | H | 0 | $COOCH_3$ | blaustichig violett |
| 89 | CN | H | H | 0 | $COOC_3H_7$ | blaustichig violett |
| 90 | $SO_2CH_3$ | H | H | 0 | $COO-i-C_4H_9$ | blaustichig violett |
| 91 | $NO_2$ | H | H | 0 | $COO(CH_2)_2OH$ | blaustichig violett |
| 92 | $NO_2$ | H | H | 0 | $COO(CH_2)_2OC_2H_5$ | blaustichig violett |
| 93 | CN | H | H | 0 | $COO(CH_2)_3OC_2H_5$ | blaustichig violett |
| 94 | $NO_2$ | H | H | 0 | $COOCH(CH_3)CH_2OCH_3$ | blaustichig violett |

Fortsetzung

| Nr. | $X^1$ | $Y^1$ | $Y^2$ | m | Z | Nuance auf PES |
|---|---|---|---|---|---|---|
| 95 | CN | H | H | 0 | $COOCH(CH_3)CH_2OC_3H_7$ | blaustichig violett |
| 96 | $NO_2$ | H | H | 0 | $COO(CH_2)_4OCH_3$ | blaustichig violett |
| 97 | $NO_2$ | H | H | 0 | $COO(CH_2)_2CH(CH_3)OC_4H_9$ | blaustichig violett |
| 98 | $NO_2$ | H | H | 0 | $COO(CH_2)_2OC_6H_5$ | blaustichig violett |
| 99 | CN | H | H | 0 | $COOCH(CH_3)CH_2OC_6H_5$ | blaustichig violett |
| 100 | $SO_2CH_3$ | H | H | 0 | $COO(CH_2)_2CH(CH_3)OC_6H_5$ | blaustichig violett |
| 101 | $NO_2$ | H | H | 0 | $COOCH_2C_6H_5$ | blaustichig violett |
| 102 | CN | $CH_3$ | H | 0 | $COOC_2H_5$ | violett |
| 103 | CN | $CH_3$ | H | 0 | $COOC_4H_9$ | violett |
| 104 | CN | $CH_3$ | H | 0 | $COO(CH_2)_2OCH_3$ | violett |
| 105 | CN | $CH_3$ | H | 0 | $COO(CH_2)_2OC_6H_5$ | violett |
| 106 | $NO_2$ | $CH_3$ | H | 0 | $COO(CH_2)_4OC_3H_7$ | violett |
| 107 | $NO_2$ | $CH_3$ | H | 0 | $COOCH(CH_3)CH_2OC_2H_5$ | violett |
| 108 | $NO_2$ | $CH_3$ | H | 0 | $COO(CH_2)_2(CH_3)CHOC_4H_9$ | violett |
| 109 | $NO_2$ | $C_2H_5$ | H | 0 | $COOC_3H_7$ | violett |
| 110 | $SO_2CH_3$ | $C_2H_5$ | H | 0 | $COO(CH_2)_2OC_3H_7$ | violett |
| 111 | $NO_2$ | H | H | 0 | $C_6H_5$ | rotstichig marine |
| 112 | CN | H | H | 0 | $C_6H_5$ | blauviolett |
| 113 | $SO_2CH_3$ | H | H | 0 | $C_6H_4-4-C_2H_5$ | blauviolett |
| 114 | $NO_2$ | $CH_3$ | H | 0 | $C_6H_5$ | blauviolett |
| 115 | $NO_2$ | H | H | 0 | CN | violett |
| 116 | CN | H | H | 0 | CN | violett |
| 117 | $SO_2CH_3$ | $CH_3$ | H | 0 | CN | violett |
| 118 | $NO_2$ | H | OH | 0 | H | violett |
| 119 | $NO_2$ | H | $OCH_3$ | 0 | H | rotstichig marine |
| 120 | CN | H | $OC_3H_7$ | 0 | H | rotstichig marine |
| 121 | $NO_2$ | H | $O(CH_2)_2OH$ | 0 | H | rotstichig marine |
| 122 | $NO_2$ | H | $OC_6H_5$ | 0 | H | blaustichig violett |
| 123 | $NO_2$ | H | $OCOCH_3$ | 0 | H | blaustichig violett |
| 124 | CN | H | $OCOCH_2OC_2H_5$ | 0 | H | blaustichig violett |

Fortsetzung

| Nr. | $X^1$ | $Y^1$ | $Y^2$ | m | Z | Nuance auf PES |
|---|---|---|---|---|---|---|
| 125 | $SO_2CH_3$ | H | $OCO(CH_2)_2OCH_3$ | 0 | H | blaustichig violett |
| 126 | $SO_2CH_3$ | H | $OCOOCH_3$ | 0 | H | rotstichig marine |
| 127 | $SO_2CH_3$ | H | $OCOO(CH_2)_2OCH_3$ | 0 | H | rotstichig marine |
| 128 | CN | $CH_3$ | OH | 0 | H | rotstichig marine |
| 129 | CN | $CH_3$ | $OC_2H_5$ | 0 | H | rotstichig marine |
| 130 | $NO_2$ | $CH_3$ | $O(CH_2)_2OCH_3$ | 0 | H | rotstichig marine |
| 131 | $NO_2$ | $CH_3$ | $OCOC_2H_5$ | 0 | H | blaustichig violett |
| 132 | $SO_2CH_3$ | $CH_3$ | $OCOCH_2OC_4H_9$ | 0 | H | blaustichig violett |
| 133 | $NO_2$ | $CH_3$ | $OCOOC_2H_5$ | 0 | H | blaustichig violett |
| 134 | $NO_2$ | $CH_3$ | $OC_6H_5$ | 0 | H | blaustichig violett |
| 135 | $NO_2$ | H | H | 0 | H | rotstichig marine |
| 136 | CN | H | H | 1 | H | rotstichig marine |
| 137 | CN | H | H | 1 | H | rotstichig marine |
| 138 | CN | H | H | 2 | H | rotstichig marine |
| 139 | $SO_2CH_3$ | H | H | 2 | H | rotstichig marine |
| 140 | $NO_2$ | $CH_3$ | H | 0 | H | rotstichig marine |
| 141 | $NO_2$ | $CH_3$ | H | 0 | H | rotstichig marine |
| 142 | $NO_2$ | $CH_3$ | H | 1 | H | rotstichig marine |
| 143 | CN | $CH_3$ | H | 1 | H | rotstichig marine |
| 144 | $SO_2CH_3$ | $CH_3$ | H | 1 | H | rotstichig marine |

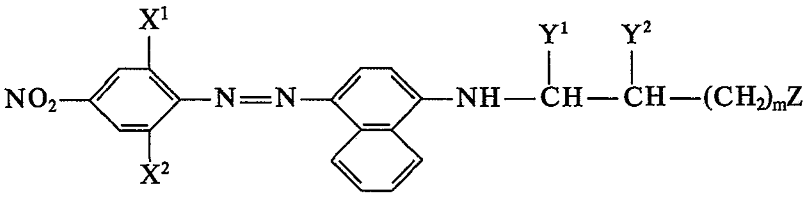

| Nr. | $X^1$ | $X^2$ | $Y^1$ | $Y^2$ | m | Z | % | Nuance auf PES |
|---|---|---|---|---|---|---|---|---|
| 145 | $NO_2$ | H | H | OH | 1 | $OC_2H_5$ | 50 | rotstichig schwarz |
| | $NO_2$ | Cl | H | OH | 1 | $OC_2H_5$ | 50 | |
| 146 | $NO_2$ | H | H | OH | 1 | $OC_6H_5$ | 50 | rotstichig schwarz |
| | $NO_2$ | Br | H | OH | 1 | $OC_6H_5$ | 50 | |
| 147 | CN | H | H | OH | 1 | $O(CH_2)_2OCH_3$ | 70 | rotstichig schwarz |
| | CN | Cl | H | OH | 1 | $O(CH_2)_2OCH_3$ | 30 | |
| 148 | $NO_2$ | H | H | H | 0 | $OC_6H_5$ | 60 | rotstichig schwarz |
| | $NO_2$ | H | H | H | 0 | $OC_6H_5$ | 40 | |
| 149 | $NO_2$ | H | H | H | 0 | $O(CH_2)_2OH$ | 50 | rotstichig schwarz |
| | $NO_2$ | Br | H | H | 0 | $O(CH_2)_2OH$ | 50 | |
| 150 | $NO_2$ | H | H | H | 0 | $C_6H_5$ | 33 ⅓ | |
| | $NO_2$ | Br | H | H | 0 | $C_6H_5$ | 33 ⅓ | rotstichig schwarz |
| | $NO_2$ | Cl | H | H | 0 | $C_6H_5$ | 33 ⅓ | |
| 151 | CN | H | H | H | 0 | $C_6H_5$ | 33 ⅓ | |
| | $NO_2$ | H | H | H | 0 | $C_6H_5$ | 33 ⅓ | marine |
| | $SO_2CH_3$ | H | H | H | 0 | $C_6H_5$ | 33 ⅓ | |
| 152 | $NO_2$ | H | H | H | 0 | CN | 50 | rotstichig schwarz |
| | $NO_2$ | Cl | H | H | 0 | CN | 50 | |
| 153 | $NO_2$ | H | $CH_3$ | H | 1 | H | 40 | rotstichig schwarz |
| | $NO_2$ | Br | $CH_3$ | H | 1 | H | 60 | |
| 154 | $NO_2$ | H | $CH_3$ | H | 1 | H | 70 | rotstichig schwarz |
| | CN | H | $CH_3$ | H | 1 | H | 30 | |
| 155 | $NO_2$ | H | H | H | 0 | $COOC_2H_5$ | 80 | rotstichig schwarz |
| | $NO_2$ | Cl | H | H | 0 | $COOC_2H_5$ | 20 | |

**Patentansprüche**

1. Monoazofarbstoffe der allgemeinen Formel I

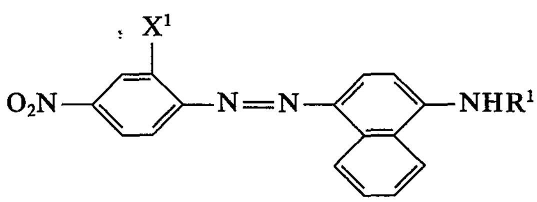

(I)

worin

$X^1$ Nitro, Cyan, Methylsulfonyl,
$R^1$ einen Rest der Formel Ia oder Ib

$$-CH-CH_2-(CH_2)_m-Z \quad (\text{mit } Y^1 \text{ am ersten } CH)$$

(Ia)

oder

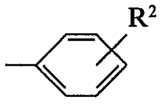

(Ib)

bedeuten, wobei

$Y^1$ Wasserstoff, Methyl oder Ethyl
Z Cyan, Phenyl, Phenoxy, gegebenenfalls substituiert durch Alkyl mit 1 bis 4 C-Atomen, Alkoxy mit 1 bis 4 C-Atomen oder Halogen; Alkoxy mit 1 bis 4 C-Atomen gegebenenfalls substituiert durch Alkoxy mit 1 bis 4 C-Atomen, Cyan oder Phenyl;
m eine Zahl von 0 bis 2 und
$R^2$ Wasserstoff, Alkyl mit 1 bis 4 C-Atomen oder Alkoxy mit 1 bis 4 C-Atomen bedeuten.

2. Monoazofarbstoffe nach Anspruch 1, dadurch gekennzeichnet, daß $Y^1$ Wasserstoff, Z Alkoxy mit 1 bis 4 C-Atomen, gegebenenfalls substituiert durch Alkoxy mit 1 bis 4 C-Atomen, Cyan oder Phenyl; oder Phenoxy, gegebenenfalls substituiert durch Alkyl mit 1 bis 4 C-Atomen, Alkoxy mit 1 bis 4 C-Atomen oder Halogen und m gleich 1 bedeuten.

3. Mischungen von Monoazofarbstoffen der allgem. Formel I mit Monoazofarbstoffen der allgem. Formel II

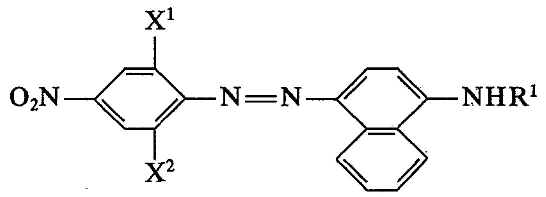

(II)

worin $X^2$ Chlor oder Brom bedeutet und $X^1$ und $R^1$ die in Anspruch 1 angegebenen Bedeutungen haben.

4. Farbstoffmischungen gemäß Anspruch 3, mit einem Gehalt von 10 bis 90 Gew.-% an Farbstoffen der Formel I und 90 bis 10 Gew.-% an Farbstoffen der Formel II oder Mischungen von Farbstoffen der Formel I mit Farbstoffen der Formel II und/oder Farbstoffen anderer Farbstoffklassen.

5. Verfahren zur Herstellung von Monoazofarbstoffen der Formel I des Anspruchs 1, dadurch gekennzeichnet, daß man ein Amin der allgemeinen Formel III

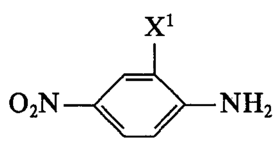

(III)

worin $X^1$ die in Anspruch 1 genannten Bedeutungen hat, in an sich bekannter Weise diazotiert und auf eine Kupplungskomponente der allgemeinen Formel IV

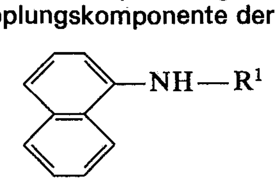

(IV)

worin $R^1$ die in Anspruch 1 genannten Bedeutungen hat, in an sich bekannter Weise kuppelt.

6. Verfahren zur Herstellung von Mischungen von Monoazofarbstoffen der Formeln I und II des Anspruchs 3, dadurch gekennzeichnet, daß man Mischungen von Aminen der allgemeinen Formeln III und V

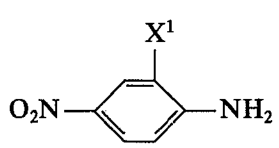

(III)

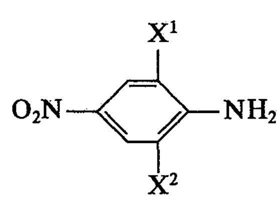

(V)

worin $X^1$ und $X^2$ die in Anspruch 3 genannten Bedeutungen haben, in an sich bekannter Weise diazotiert und auf eine Kupplungskomponente der Formel IV

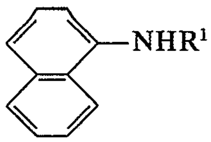

(IV)

worin $R^1$ die in Anspruch 1 genannte Bedeutung hat, in an sich bekannter Weise kuppelt.

7. Verwendung von Farbstoffen der Formel I und deren Mischungen mit Farbstoffen der Formel II und/oder Farbstoffen anderer Farbstoffklassen zum Färben und Bedrucken von Materialien aus hochmolekularen Polyestern oder Mischungen dieser Materialien mit natürlichen Materialien sowie von Materialien aus Zellulosetriacetat.

## Claims

1. Monoazo dyestuffs of the general formula I

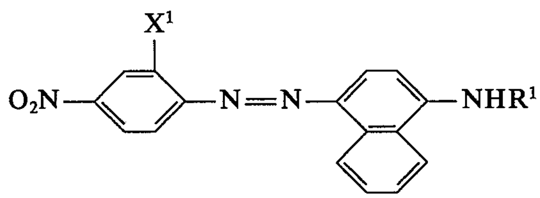

(I)

wherein $X^1$ denotes nitro, cyano, or methylsulphonyl and $R^1$ denotes a radical of formula Ia or Ib

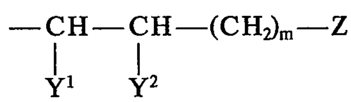

(Ia)

or

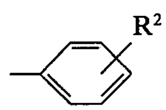

(Ib)

wherein $Y^1$ denotes hydrogen, methyl or ethyl, Z denotes cyano, phenyl, phenoxy which is optionally substituted by alkyl having 1 to 4 C atoms, alkoxy having 1 to 4 C atoms or halogen or denotes alkoxy which has 1 to 4 C atoms and is optionally substituted by alkoxy having 1 to 4 C atoms, cyano or phenyl; m denotes a number from 0 to 2 and $R^2$ denotes hydrogen, alkyl having 1 to 4 C atoms or alkoxy having 1 to 4 C atoms.

2. Monoazo dyestuffs according to Claim 1, characterised in that $Y^1$ denotes hydrogen, Z denotes alkoxy which has 1 to 4 C atoms and is optionally substituted by alkoxy with 1 to 4 C atoms, cyano or phenyl; or phenoxy which is optionally substituted by alkyl with 1 to 4 C atoms, alkoxy with 1 to 4 carbon atoms or halogen and m denotes 1.

3. Mixtures of monoazo dyestuffs of the general formula I with monoazo dyestuffs of the general formula II

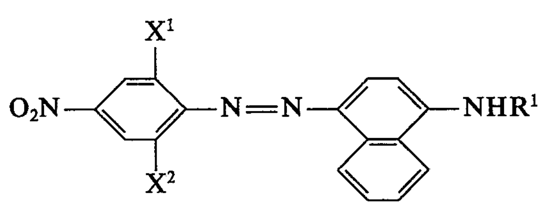

(II)

wherein $X^2$ denotes chlorine or bromine and $X^1$ and $R^1$ have the meanings indicated in Claim 1.

4. Mixtures of dyestuffs according to Claim 3, containing 10 to 90% by weight of dyestuffs of the formula I and 90 to 10% by weight of dyestuffs of the formula II, or mixtures of dyestuffs of other classes of dyestuff.

5. Process for the manufacture of monoazo dyestuffs of the formula I of Claim 1, characterised in that an amine of the general formula III

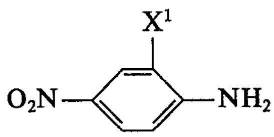

(III)

wherein $X^1$ has the meanings mentioned in Claim 1, is diazotised in a manner which is in itself known and the product is coupled, in a manner which is in itself known, with a coupling component of the general formula IV

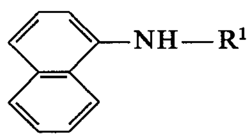

(IV)

wherein $R^1$ has the meanings mentioned in Claim 1.

6. Process for the manufacture of mixtures of monoazo dyestuffs of the formulae I and II of Claim 3, characterised in that mixtures of amines of the general formulae III and V

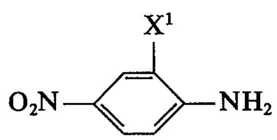

(III)

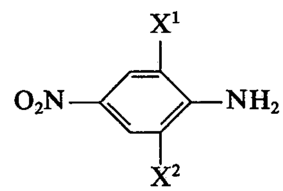

(V)

wherein $X^1$ and $X^2$ have the meanings mentioned in Claim 3 are diazotised in a manner which is in itself known and the product is coupled, in a manner which is in itself known, with a coupling component of the formula IV

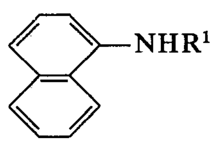

(IV)

wherein $R^1$ has the meaning mentioned in Claim 1.

7. Use of dyestuffs of the formula I and mixtures thereof with dyestuffs of the formula II and/or dyestuffs of other classes of dyestuff for dyeing and printing materials made from high-molecular polyesters or mixtures of these materials with natural materials and also materials made from cellulose triacetate.

**Revendications**

1. Colorants monoazoïques répondant à la formule générale I:

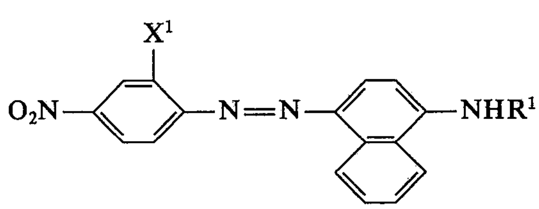

(I)

dans laquelle

$X^1$ représente un radical nitro, cyano ou méthylsulfonyle,
$R^1$ représente un radical répondant à l'une des formules Ia et Ib

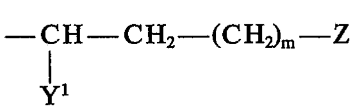

(Ia)

ou

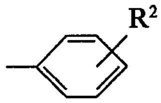

(Ib)

dans lesquelles

$Y^1$ représente l'hydrogène ou un radical méthyle ou éthyle,
Z représente un radical cyano, un radical phényle, un radical phénoxy éventuellement porteur d'un alkyle en $C_1$—$C_4$, d'un alcoxy en $C_1$—$C_4$ ou d'un halogène, un radical alcoxy contenant de 1 à 4 atomes de carbone et éventuellement porteur d'un alcoxy en $C_1$—$C_4$, d'un cyano ou d'un phényle,
m représente un nombre de 0 à 2 et
$R^2$ représente l'hydrogène, un radical alkyle en $C_1$—$C_4$ ou un radical alcoxy en $C_1$—$C_4$.

2. Colorants monoazoïques selon la revendication 1 caractérisés en ce que $Y^1$ représente l'hydrogène, Z représente un radical alcoxy contenant de 1 à 4 atomes de carbone et éventuellement porteur d'un alcoxy en $C_1$—$C_4$, d'un cyano ou d'un phényle, ou un radical phénoxy éventuellement porteur d'un alkyle en $C_1$—$C_4$, d'un alcoxy en $C_1$—$C_4$ ou d'un halogène, et m est égal à 1.

3. Mélanges de colorants monoazoïques de formule générale I avec des colorants monoazoïques répondans à la formule générale II:

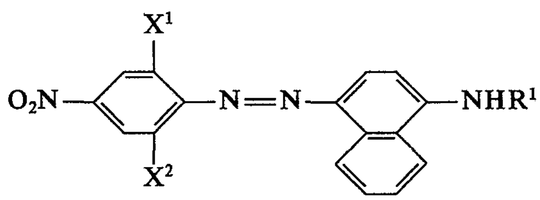

(II)

dans laquelle $X^2$ représente le chlore ou le brome tandis que $X^1$ et $R^1$ ont les significations qui ont été données à la revendication 1.

4. Mélanges de colorants selon la revendication 3 qui contiennent de 10 à 90% en poids de colorants de formule I et de 90 à 10% en poids de colorants de formule II, ou mélanges de colorants de formule I avec des colorants de formule II et/ou des colorants d'autres catégories.

5. Procédé de préparation de colorants monoazoïques de formule I selon la revendication 1, procédé caractérisé en ce qu'on diazote de manière connue une amine répondant à la formule générale III:

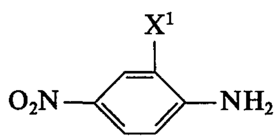

(III)

dans laquelle $X^1$ a la signification donnée à la revendication 1, et on copule le diazoïque de manière connue avec un copulant répondant à la formule générale IV:

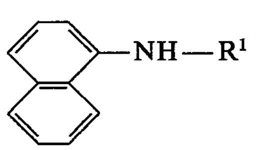

(IV)

dans laquelle $R^1$ a la signification donnée à la revendication 1.

6. Procédé de préparation de mélanges de colorants monoazoïques de formules I et II selon la revendication 3, procédé caractérisé en ce qu'on diazote de manière connue des mélanges d'amines de formules générales III et V:

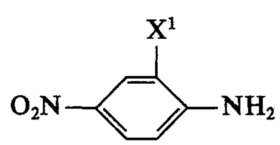

(III)

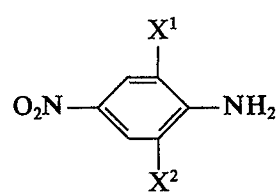

(V)

dans lesquelles $X^1$ et $X^2$ ont les significations données à la revendication 3, et on copule de manière

connue avec un copulant répondant à la formule IV

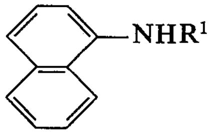

(IV)

dans laquelle $R^1$ a la signification donnée à la revendication 1.

7. Application de colorants de formule I et de leurs mélanges avec des colorants de formule II et/ou des colorants d'autres catégories, à la teinture et à l'impression de matières en polyesters macromoléculaires ou de mélanges de ces matières avec des matières naturelles, ainsi que de matières en triacétate de cellulose.